# EUROPEAN PATENT APPLICATION

(11) **EP 4 063 245 A1**
(43) Date of publication of application: **28.09.2022**
(21) Application number: 22164048.5
(22) Date of filing: 24.03.2022
(51) Int. Cl.: B62H 1/06, B62H 1/02

(54) **ADJUSTABLE BICYCLE SUPPORT**

(30) Priority: 26.03.2021 IT 202100007433
(71) Applicant: Ursus S.P.A., 36027 Rosa' VI (IT)
(72) Inventor: FERRONATO, Sergio, 36027 ROSA' (VI) (IT); FERRONATO, Mirko, 36027 ROSÀ (VI) (IT); FERRONATO, Simone, 36027 ROSÀ (VI) (IT)
(74) Representative: Marchioro, Paolo

(57) **Abstract**

The present invention relates to an adjustable-length bicycle holder (10), comprising:
- a fixing bracket (11);
- a telescopic column support (12), articulated to the fixing bracket (11), comprising a rod element (13) and a tubular element (14) telescopically removable from the rod element (13);
- reversible locking means (16) for locking the position of the tubular element (14) in relation to the rod element (13).

## Description

The invention relates to an adjustable-length bicycle holder.

Telescopic bicycle holders are now known, and increasingly popular because of their versatility, comprising a bracket for attachment to a lower part of a bicycle, to which a telescopic column with a foot for ground support is articulated.

The column support consists of a rod element, hinged to the bracket, and of a tubular element, on which the ground support foot is defined, with the rod element being partially inserted into the tubular element itself and being removable and insertable with respect to it to lengthen or shorten the telescopic column support, as desired.

Such an adjustable-length bicycle holder has reversible locking means configured to reversibly constrain the tubular element to the rod element and to release it therefrom, still reversibly.

Such reversible locking means generally comprise a push button or lever, and an elastic thrust element, which are configured and cooperate with each other in such a way that when the push button or lever is actuated to cause the tubular element to disengage from the rod element, the elastic element is loaded and pushes the push button or lever so that, when the manual action of the user ceases, the push button or lever returns to the locking position of the tubular element with respect to the rod element.

These well-known adjustable-length bicycle holders, although widespread and popular, have certain limitations and drawbacks.

Generally, in telescopic bicycle holders of the known type, the push button, or lever, is partly mounted between the rod element and the telescopic element, while the elastic thrust element is mounted either inside the rod element or in a corresponding seat inside the tubular element.

For these reasons, the telescopic bicycle holders known today require a certain amount of effort in terms of assembly; the elastic thrust element must be inserted manually with dexterity into its seat, to then receive the push button, or lever, which in turn must be at least partially positioned between the rod element and the tubular element.

In addition, the elastic thrust element is in a position where, if it needs to be replaced, several components have to be disassembled, which takes time for a trained technician.

A further limitation of the known adjustable-length bicycle holders lies in the fact that the coupling between the coupling portion of the push button, or between the coupling portion of the lever, and the corresponding coupling through-holes defined on the rod element or on the tubular element is generally a coupling which, for technical and practical reasons, takes place with clearance, which clearance can lead to unstable situations of the bicycle holder if the tubular element and the rod element can move, even slightly, with respect to each other when loaded, i.e. when the bicycle holder is in the use arrangement.

The task of the present invention is to develop an adjustable-length bicycle holder capable of obviating the aforementioned drawbacks and limitations of the prior art.

In particular, an object of the invention is to develop an adjustable-length bicycle holder which is easier to assemble and quicker to disassemble than similar bicycle holders of known types.

A further object of the invention is to develop an adjustable-length bicycle holder which is more robust and stable than known adjustable-length bicycle holders.

A further object of the invention is to develop an easy-to-use and intuitive adjustable-length bicycle holder in the same way as known bicycle holders. The above-mentioned task as well as the above-mentioned objects are achieved by an adjustable-length bicycle holder according to claim 1.

Further features of the adjustable-length bicycle holder according to claim 1 are described in the dependent claims.

The task and the aforesaid objects, together with the advantages that will be mentioned hereinafter, are highlighted by the description of four embodiments of the invention, which is given, by way of indication but not of limitation, with reference to the attached drawing tables, where:
- Figure 1 represents a perspective view of a length-adjustable bicycle holder according to the invention in a first embodiment;
- Figure 2 represents a side view in longitudinal cross-section of a portion of the bicycle holder of Figure 1;
- Figure 3 represents a perspective exploded view of the bicycle holder of Figures 1 and 2;
- Figure 3A represents a front view of a detail of Figure 3;
- Figure 4 represents a detail of Figure 2;
- Figure 5 represents a cross section of the detail of Figure 4;
- Figure 6 represents the same view as in Figure 2 in another operating arrangement of the bicycle holder according to the invention;
- Figure 7 represents a detail of Figure 6;
- Figure 8 represents a cross-sectional side view of a variant embodiment of a detail of the bicycle holder according to the invention;
- Figure 9 represents a cross-section of the bicycle holder according to the invention in the variant embodiment shown in Figure 8;
- Figure 10 represents a perspective view of a variant embodiment of another detail of a bicycle holder according to the invention;
- Figure 11 represents a top view of a portion of the bicycle holder of Figure 1;
- Figure 12 represents a cross-sectional detail of a bicycle holder according to the invention in a second embodiment;
- Figure 13 represents a cross-sectional detail of a bicycle holder according to the invention in a third embodiment;
- Figure 14 represents a cross-sectional detail of a bicycle holder according to the invention in a fourth embodiment, in a first assembly arrangement;
- Figure 15 represents the same view as Figure 14, in a second assembly arrangement;
- Figure 16 represents a perspective view of a construction detail of the bicycle holder of Figure 14;
- Figure 17 represents a perspective view of another construction detail of the bicycle holder of Figure 14.

With reference to the above-mentioned figures, an adjustable-length bicycle holder according to the invention is indicated as a whole by the number **10**. This adjustable-length bicycle holder **10** comprises:
- a fixing bracket **11**;
- a telescopic column support **12** articulated to the fixing bracket **11**; such telescopic column support **12** comprises a rod element **13**, articulated to the fixing bracket **11**, and a tubular element **14** telescopically removable from the rod element **13**; the tubular element **14** has a support end **15**;
- reversible locking means **16** for locking the position of said tubular element **14** with respect to the rod element **13**.

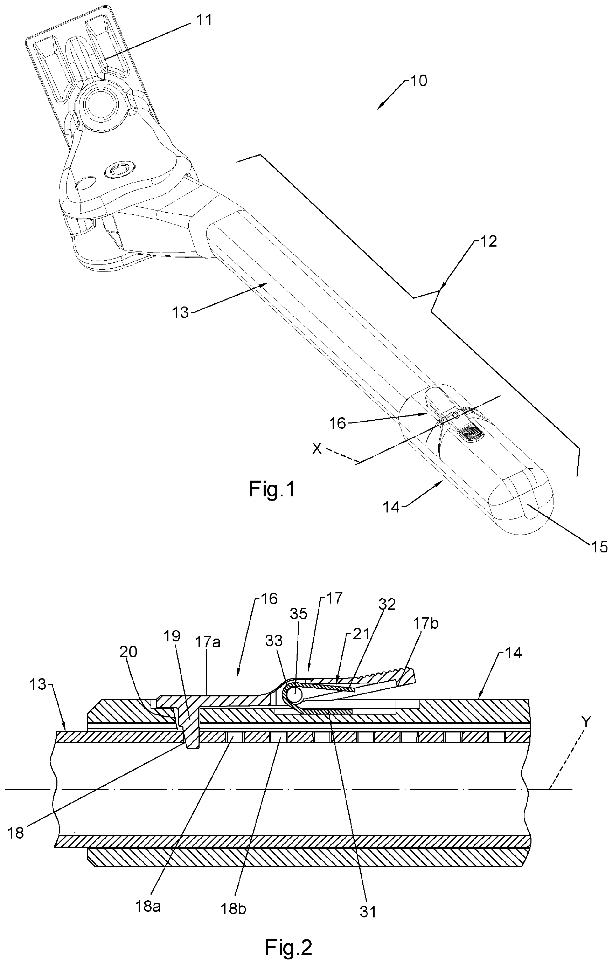

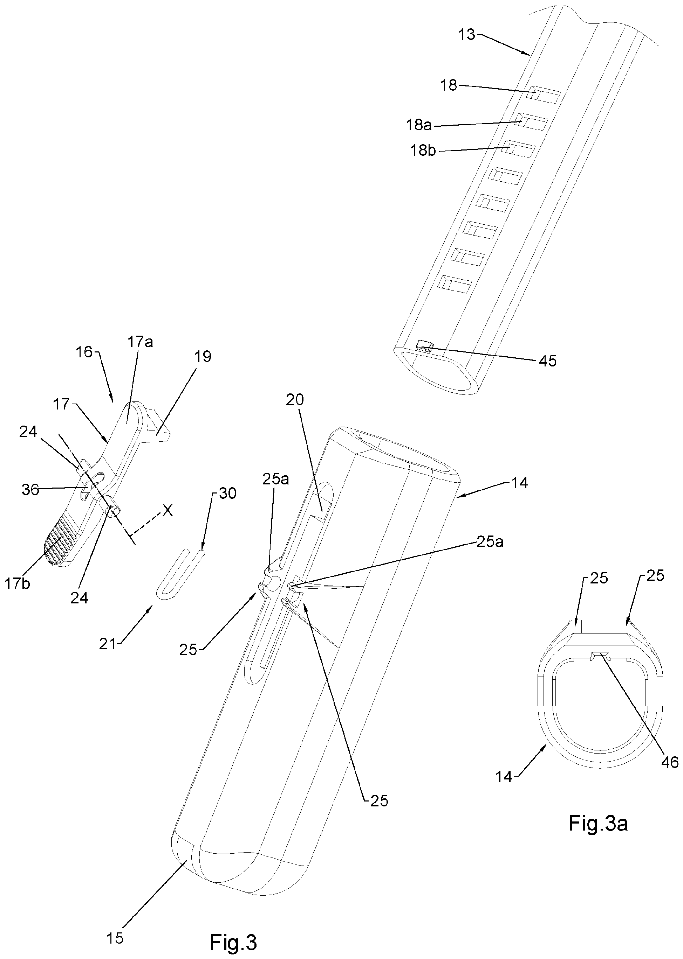

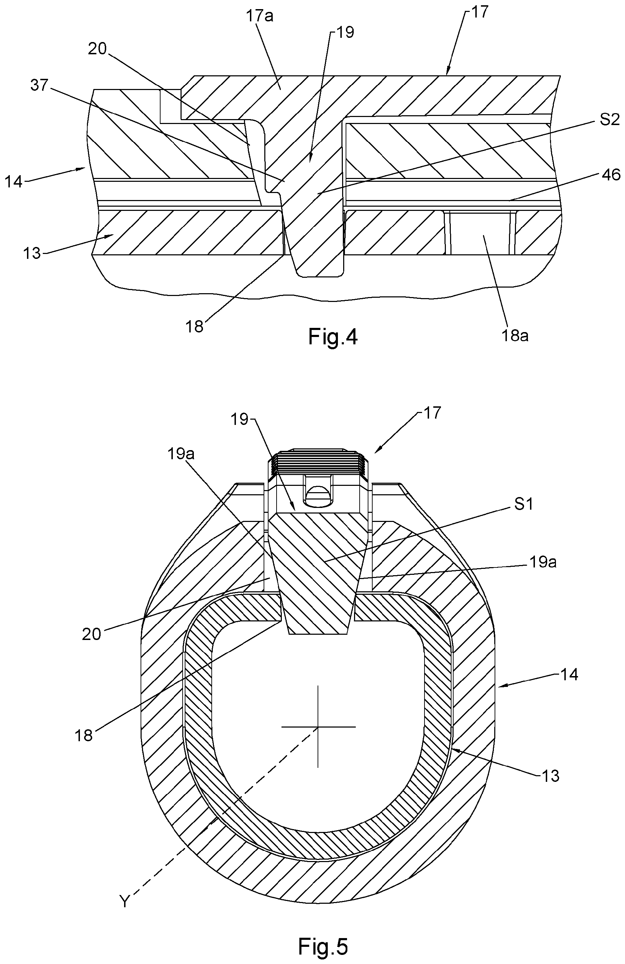

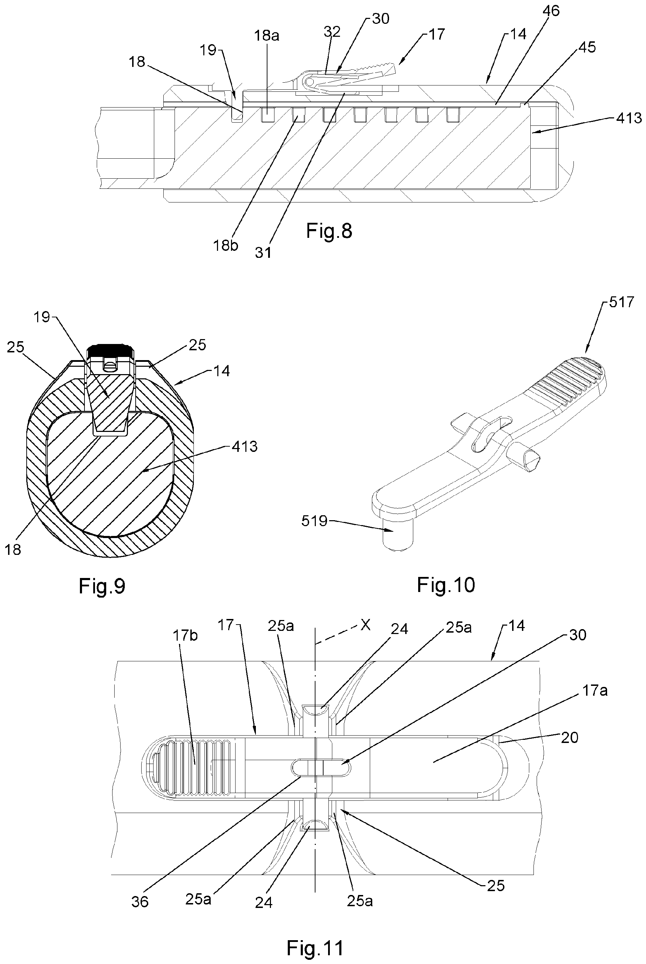

The special feature of the adjustable-length bicycle holder **10** is that these reversible locking means **16** comprise:
- a lever **17** hinged along a hinge axis **X** to said tubular element **14**;
- a series of coupling holes **18, 18a, 18b** defined on the rod element **13**;
- a passage hole **20** for a coupling tooth **19**, said passage hole **20** being defined on the tubular element **14** at said series of coupling holes **18**, **18a**, **18b** in such a way that it alternatively overlaps with any one of said coupling holes **18**, **18a**, **18b**, for example with the first coupling hole **18** in Figures 2 and 4;
- a coupling tooth **19** protruding from a coupling part **17a** of the lever **17**;
- an elastic thrust element **21**, interposed between the tubular element **14** and a drive part **17b** of the lever **17**; the drive part **17b** is opposite said coupling part **17a** with respect to said hinge axis **X**; the elastic thrust element **21** is configured to push on the lever **17** in such a way that the coupling tooth **19** is inserted in said passage hole **20** and in a facing hole of the series of coupling holes **18**, **18a**, **18b**;
- two opposite hinge reliefs **24**, clearly visible in Figures 3 and 11, coaxial with each other, defined on the lever **17**;
- two opposing engagement appendages **25**, defined on the tubular element **14** and each configured to house a corresponding hinge relief **24** of said lever **17.**

In particular, but not exclusively, the lever **17** is external to said tubular element **14.**

Again, in particular, the lever **17** is entirely external to the tubular element **14.** In the present embodiment, which is of course a non-limiting example of the invention, the hinge reliefs **24** and the engagement appendages **25** are configured to be mutually reversibly interlocking.

In particular, the engagement appendages **25** are 'C'-shaped, and have two facing elastically deformable reliefs **25a** defining between them a seat for a hinge relief **24** and a passage opening for such a hinge relief.

In particular, the hinge reliefs **24** extend from the lever **17** and form a single body with said same lever **17.**

Again particularly, the lever **17** and the hinge reliefs **24** are defined by a single body made of plastic material, or alternatively by a single body made of metal material, or alternatively by a single body made of carbon fibre.

The hinge reliefs **24** and the engagement appendages **25** define the hinge axis **X.**

In such a first embodiment of the adjustable-length bicycle holder **10** according to the invention, the elastic thrust element **21** comprises a fork spring **30** defined by two opposite support arms **31**, **32** joined by a substantially C-shaped connecting section **33.**

A first support arm **31** is supported against the tubular element **14**, and a second support arm **32** is supported against said drive part **17b** of said lever **17.**

The connecting section **33** is arranged to partially surround a supporting relief **35** integral with the lever **17.**

The lever **17** also includes a window **36** for access to the fork spring **30.**

This window **36** facilitates the handling of the fork spring **30** below the lever **17**, for example, this window **36** facilitates the assembly of the fork spring **30** itself. This adjustable-length bicycle holder **10** as described above is particularly easy to assemble, since it is necessary and sufficient to telescopically couple the rod element **13** to the tubular element **14** and then, acting exclusively from the outside, to fit the hinge reliefs **24** to the engagement appendages **25**, after having interposed the elastic thrust element **21.**

Preferably, and advantageously, the coupling tooth **19** has a wedge-shaped cross-section **S1**, as clearly shown in Figure 5.

The term 'cross-section' is intended to mean a cross-section according to a sectional plane which is orthogonal to the main extension direction **Y** of the adjustable-length bicycle holder **10.**

In particular, the width of the major base of the wedge-shaped cross-section **S1** is greater than the corresponding width of said coupling holes **18**, **18a**, **18b**; thanks to such a configuration, the coupling tooth **19** engages in the chosen coupling hole **18, 18a, 18b** until the side walls **19a** of the coupling tooth **19** are pressed against corresponding edges of the chosen coupling hole **18**, **18a**, **18b,** and in this way any clearance between the coupling tooth **19** and the coupling hole **18, 18a, 18b** in the transverse direction is eliminated.

Again preferably and advantageously, the coupling tooth **19** has a wedge-shaped longitudinal section **S2.**

The term 'longitudinal section' means a section in accordance with a sectional plane which includes the main extension direction **Y** of the adjustable-length bicycle holder **10.**

Thanks to a similar configuration of the coupling tooth **19**, any clearance between the coupling tooth **19** and the coupling hole **18, 18a, 18b** is also eliminated in the longitudinal direction.

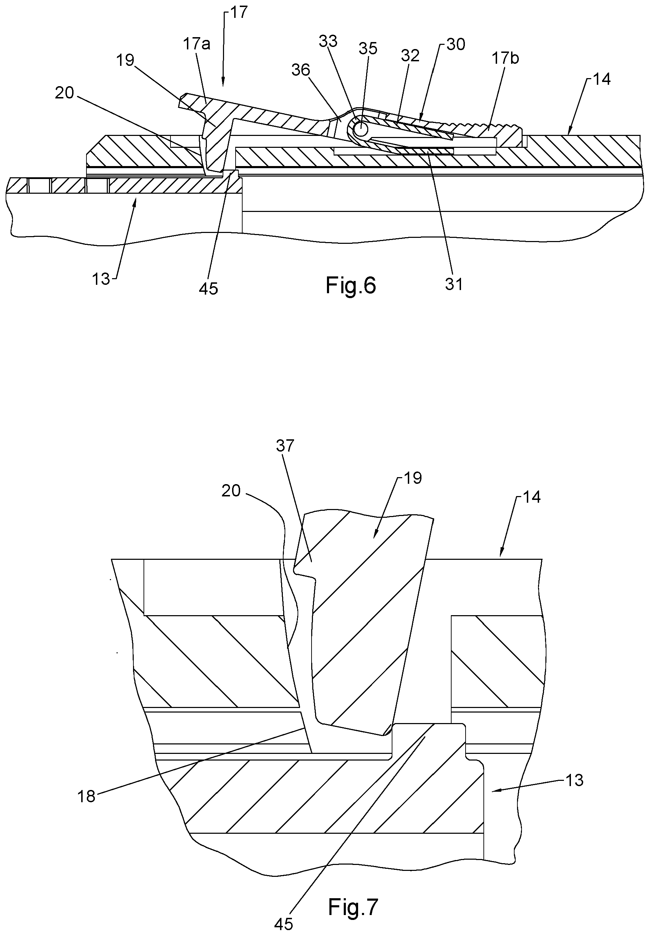

Additionally, the coupling tooth **19** comprises an end-stroke step **37**, clearly visible in Figures 4 and 7, configured to meet an edge of a coupling hole **18**, **18a, 18b;** such end-stroke step **37** prevents the coupling tooth **19** from being excessively driven into the coupling hole **18**, **18a**, **18b**.

In such a first embodiment of the adjustable-length bicycle holder **10** according to the invention, the rod element **13** comprises a tubular body, as clearly visible in Figures 2 to 7; in a variant embodiment of the invention, exemplified in Figures 8 and 9, the rod element **413** comprises a solid body.

In the embodiment of the invention described so far, the coupling tooth **19** is substantially a six-sided geometric solid.

In a further variant embodiment of the invention, exemplified in Figure 10, the coupling tooth **519** is cylindrical or truncated cone shaped.

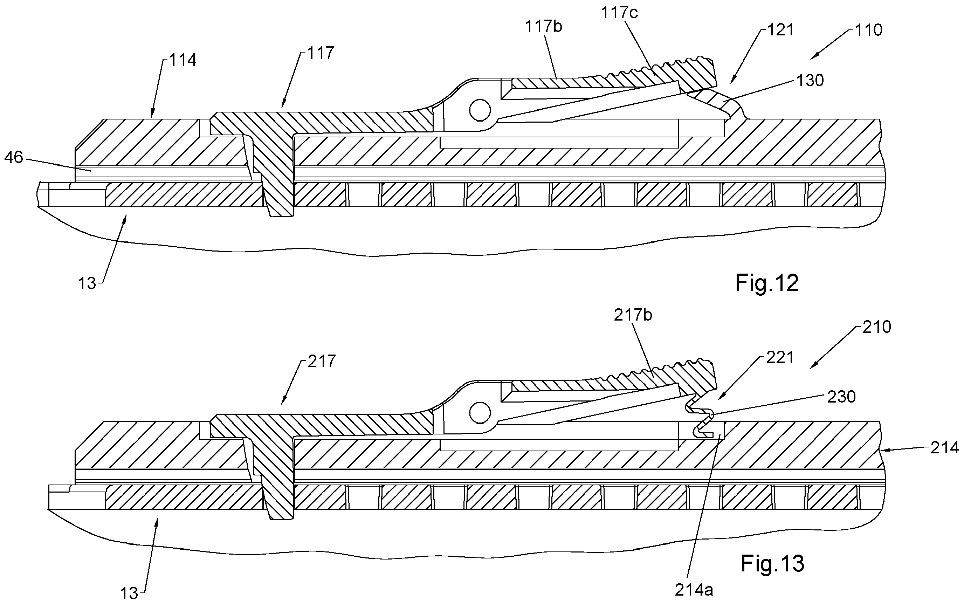

In a second embodiment of the adjustable-length bicycle holder according to the invention, exemplified in Figure 12 and indicated therein by number **110**, the elastic thrust element **121** comprises an elastically deformable appendage **130** extending in a cantilever fashion from said tubular element **114** towards a striker portion **117c** of said drive part **117b** of the lever **117.**

In a third embodiment of the adjustable-length bicycle holder according to the invention, exemplified in Figure 13 and indicated therein by number **210**, the elastic thrust element **221** comprises an elastically deformable appendage **230** extending in a cantilever fashion from said drive part **217b** of said lever **217** towards a striker area **214a** of the tubular element **214.**

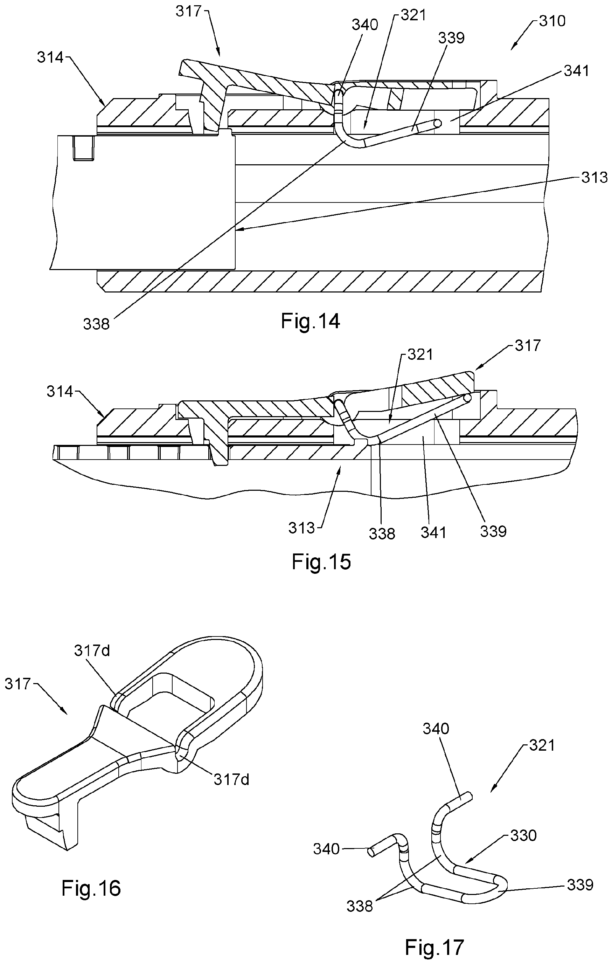

In a fourth embodiment of the adjustable-length bicycle holder according to the invention, exemplified in Figures 14 to 17 and indicated therein by number **310**, the elastic thrust element **321** comprises an 'omega' spring **330** comprising in turn:
- a curved support portion **338**;
- a thrust portion **339**, extending from said curved support portion **338**, said thrust portion **339** being in contact with the drive part **317b** of the lever **317**;
- two opposite coupling and hinging ends **340**, coaxial, extending from said curved support portion **338** on the side opposite the thrust portion **339.**

The curved support portion **338** is supported against the rod element **313** through a corresponding window **341** defined on said tubular element **314.** The lever **317** has two hinge recesses **317d** configured to accommodate the coupling and hinging ends **340** of the 'omega' spring **330.**

Such an adjustable-length bicycle holder **310** is assembled by first resting the lever **317** on the tubular element **314** with the 'omega' spring **330** coupled thereon, and then inserting the rod element **313** into the tubular element **314**, wherein the passage of the rod element **313** pushes the thrust portion **339** of the 'omega' spring **330** outwardly and against the lever **317**; the coupling and hinging ends **340** are obviously engaged to corresponding engagement appendages defined on the tubular element **314**, not illustrated for simplicity purposes.

Another important peculiarity of the adjustable-length bicycle holder **10**, **110**, **210, 310,** as described above and according to the present invention, lies in the fact that the rod element **13**, **313** comprises an anti-slip tooth **45**, clearly visible in Figures 3 and 7.

The coupling tooth **19** and such anti-slip tooth **45** are configured to meet when said coupling tooth **19** is disengaged from said coupling holes **18**, **18a**, **18b**, in a step of removing said tubular element **14** from said rod element **13.**

Thanks to this configuration, it is the same coupling tooth **19** that, even in its maximum extraction configuration from the coupling holes **18**, **18a**, **18b** determines a relief that, in case of excessive removal of the tubular element **14**, intercepts the anti-slip tooth **45** preventing the separation of the tubular element **14** from the rod element **13.**

In order to allow the passage of the anti-slip tooth **45** during the assembly of the bicycle holder **10**, the tubular element **14b** has a longitudinal groove **46**, shaped precisely to allow the passage and the translation of said anti-slip tooth **45.**

In order to remove the rod element **13** from the tubular element **14**, it is therefore necessary to remove the lever **17** and its coupling tooth **19** first. Practically, it has been established that the invention achieves the intended task and objects.

In particular, the invention has developed an adjustable-length bicycle holder which is easier to assemble and quicker to disassemble than similar bicycle holders of the known type.

In addition, the invention has developed an adjustable-length bicycle holder that is more robust and stable than known adjustable-length bicycle holders, due to the coupling tooth and the coupling holes cooperating to eliminate clearance that is hazardous to the stability of the bicycle holder itself.

In addition, the invention has developed an adjustable-length, easy-to-use and intuitive bicycle holder on a par with known bicycle holders.

Further, the invention has developed an adjustable-length bicycle holder which, without the need for additional anti-extraction components, is able to prevent the tubular element from completely slipping out of the rod element, thanks to the peculiar configuration of an anti-slip tooth defined on the rod element and of the coupling tooth of the lever.

The invention thus conceived is susceptible of numerous modifications and variants, all of which are within the scope of the inventive concept; moreover, all the details may be replaced by other technically equivalent elements.

In practice, the components and materials used, as well as the dimensions and shapes, as long as they are compatible with the specific use, can be any according to requirements and the state of the art.

If the characteristics and techniques mentioned in any claim are followed by reference signs, these reference signs are to be intended for the sole purpose of increasing the intelligibility of the claims and, consequently, such reference signs have no limiting effect on the interpretation of each element identified by way of example by these reference signs.

## Claims

1. Adjustable-length bicycle holder (10), comprising:
- a fixing bracket (11);
- a telescopic column support (12) articulated to said fixing bracket (11), said telescopic column support (12) comprising a rod element (13), articulated to said fixing bracket (11), and a tubular element (14) telescopically removable from said rod element (13), said tubular element (14) having a support end (15);
- reversible locking means (16) for locking the position of said tubular element (14) relative to said rod element (13),
**characterised in that** said reversible locking means (16) comprise:
- a lever (17) hinged according to a hinge axis (X) to said tubular element (14);
- a series of coupling holes (18, 18a, 18b) defined on said rod element (13);
- a passage hole (20) for a coupling tooth (19), said passage hole (20) being defined on said tubular element (14) at said series of coupling holes (18, 18a, 18b) in such a way as to overlap alternately with any one of said coupling holes (18, 18a, 18b);
- a coupling tooth (19) projecting from a coupling part (17a) of said lever (17);
- an elastic thrust element (21, 121, 221, 321) interposed between said tubular element (14), or between said rod element (13) and a drive part (17b) of said lever (17), said drive part (17b) being opposite said coupling part (17a) with respect to said hinge axis (X), said elastic thrust element (21, 121, 221, 321) being configured to push on said lever (17) so that said coupling tooth (19) is inserted into said passage hole (20) and into a facing hole of said series of coupling holes (18, 18a, 18b);
- two opposite hinge reliefs (24), coaxial to each other, defined on said lever (17);
- two opposing engagement appendages (25), defined on said tubular element (14) and each configured to house a corresponding hinge relief (24) of said lever (17).

2. Bicycle holder according to claim 1, **characterised in that** said lever (17) is external to said tubular element (14).

3. Bicycle holder according to one or more of the preceding claims, **characterised in that** said hinge reliefs (24) and said engagement appendages (25) are configured to be mutually reversibly interlocking.

4. Bicycle holder according to one or more of the preceding claims, **characterised in that** said engagement appendages (25) are C-shaped and have two facing elastically deformable reliefs (25a) defining between them a seat for a hinge relief (24) and a passage opening for said hinge relief.

5. Bicycle holder according to one or more of the preceding claims, **characterised in that** said hinge reliefs (24) extend from said lever (17) and form a single body with said same lever (17).

6. Bicycle holder according to one or more of the preceding claims, **characterised in that** said elastic thrust element (21) comprises a fork spring (30) defined by two opposite support arms (31, 32) joined by a substantially C-shaped connecting section (33), a first support arm (31) being supported against said tubular element (14), and a second support arm (32) being supported against said drive part (17b) of said lever (17).

7. Bicycle holder according to one or more of the preceding claims, **characterised in that** said coupling tooth (19) has a wedge-shaped cross-section (S1).

8. Bicycle holder according to one or more of the preceding claims, **characterised in that** said coupling tooth (19) has a wedge-shaped longitudinal section (S2).

9. Bicycle holder according to one or more of the preceding claims, **characterised in that** said lever (17) comprises a window (36) for accessing said fork spring (30).

10. Bicycle holder according to one or more of the preceding claims, **characterised in that** said coupling tooth (19) comprises an end-stroke step (37) configured to meet an edge of a coupling hole (18, 18a, 18b), said end-stroke step (37) being suitable for preventing said coupling tooth (19) from being excessively driven into the coupling hole (18, 18a, 18b).

11. Bicycle holder according to one or more of the preceding claims, **characterised in that** said elastic thrust element (121) comprises an elastically deformable appendage (130) extending in a cantilever fashion from said tubular element (114) towards a striker portion (117c) of said drive part (117b) of said lever (117).

12. Bicycle holder according to one or more of claims 1 to 8, **characterised in that** said elastic thrust element (221) comprises an elastically deformable appendage (230) extending in a cantilever fashion from said drive part (217b) of said lever (217) towards a striker area (214a) of said tubular element (214).

13. Bicycle holder according to one or more of claims 1 to 8, **characterised in that** said elastic thrust element (321) comprises an 'omega' spring (330) comprising in turn:
- a curved support portion (338);
- a thrust portion (339), extending from said curved support portion (338), said thrust portion (339) being in contact with said drive part (317b);
- two opposite coupling and hinging ends (340), coaxial, extending from said curved support portion (338) on the opposite side to said thrust portion (339),
said curved support portion (338) being supported against said rod element (313) through a corresponding window (341) defined on said tubular element (314).

14. Bicycle holder according to one or more of the preceding claims, **characterised in that** said rod element (13) comprises an anti-slip tooth (45), said coupling tooth (19) and said anti-slip tooth (45) being configured to meet when said coupling tooth (19) is disengaged from said coupling holes (18, 18a, 18b), in a step of removing said tubular element (14) from said rod element (13).
